# EUROPÄISCHE PATENTSCHRIFT

(11) **EP 2 625 552 B1**
(45) Veröffentlichungstag und Bekanntmachung des Hinweises auf die Patenterteilung: **26.08.2015**
(21) Anmeldenummer: 11760726.7
(22) Anmeldetag: 30.08.2011
(51) Int. Cl.: G01V 3/16

(54) **ANORDNUNG ZUM BETREIBEN EINES HANDGEFÜHRTEN GEOPHYSIKALISCHEN ORTUNGSGERÄTES**
ARRANGEMENT FOR OPERATING A HAND-HELD GEOPHYSICAL POSITIONING DEVICE
AGENCEMENT POUR LE FONCTIONNEMENT D'UN APPAREIL DE LOCALISATION GÉOPHYSIQUE GUIDÉ À LA MAIN

(30) Priorität: 07.10.2010 DE 202010014054 U
(43) Veröffentlichungstag der Anmeldung: 14.08.2013
(73) Patentinhaber: Okm GmbH, 04603 Windischleuba (DE)
(72) Erfinder: KRAUSS, Andreas, 04617 Fockendorf (DE)
(74) Vertreter: Meissner, Bolte & Partner GbR
(86) Internationale Anmeldenummer: PCT/EP2011/064859
(87) Internationale Veröffentlichungsnummer: WO 2012/045527

(56) Entgegenhaltungen:
- US-A- 3 828 242
- US-A- 4 068 164
- US-A- 4 719 426
- US-B1- 6 954 072

## Beschreibung

Die Erfindung betrifft eine Anordnung zum Betreiben eines handgeführten geophysikalischen Ortungsgerätes, gemäß Patentanspruch 1.

Zurückgehend auf die Firma OKM Ortungstechnik Krauß & Müller GmbH, Windischleube, sind verschiedene Anordnungen zum Betreiben von geophysikalischen Ortungsgeräten bekannt.

Aus der DE 10 2005 011 264 A1 ist es beispielsweise bekannt, eine Objektortung in einem vorgegebenen Gelände mittels einer Magnetfeldsondierung durchzuführen. Hierzu wird das Gelände in ein virtuelles Suchfeld mit netzartig über das Suchfeld verteilten Messpunkten unterteilt. Dabei wird eine momentane Geländeposition einer im Gelände bewegten Magnetfeldsondiereinrichtung durch eine Positionserfassungseinrichtung erfasst und in einer Position innerhalb des Suchfeldes übertragen. Bei einem Erreichen einer einem Messpunkt innerhalb des Suchfeldes entsprechenden Geländeposition der Magnetfeldsondiereinrichtung wird eine Magnetfeldmessung ausgeführt. Die über dem Suchfeld ermittelten ortsabhängigen innerhalb des Geländes erfassten Magnetfeldwerte werden bildgebend verarbeitet. Nachteilig bei einer derartigen Vorgehensweise ist die große Anzahl an benötigten Vorrichtungen. Es werden eine Magnetfeldsondiereinrichtung, ein Positionserfassungssystem, eine Verarbeitungseinrichtung für Orts- und Messwertdaten und eine Verarbeitungs- und Anzeigeeinheit zum Erstellen einer die Orts- und Messwertdaten visualisierenden Darstellung. Das Verfahren stellt sich als relativ zeit- und personalaufwendig dar.

Sofern nur eine Person eine Suche nach Objekten ausführen will, stellt sich eine Vorrichtung gemäß der Lehre der DE 10 2005 057 154 A1 als sehr praktikabel dar. Die dortige Vorrichtung basiert auf einem handgeführten geophysikalischen Ortungsgerät mittels Auswertung von Magnetfeldänderungen, wobei die Vorrichtung Flux-Gate-Sensoren sowie eine Bewertungs- und Anzeigeeinheit umfasst. Die Flux-Gate-Sensoren sind in einer abgesetzten Sonde befindlich, wobei die Anzeigeeinheit als Videobrille ausgestaltet ist und zwischen der Bewertungseinheit und der Videobrille eine Verbindung besteht.

Es hat sich jedoch gezeigt, dass ein offensichtliches Suchen nach im Boden verborgenen Gegenständen eine Reihe von Nachteilen mit sich zieht. So wird beispielsweise durch die Verwendung von Detektionsvorrichtungen die Aufmerksamkeit von Passanten auf den Anwender und das abzusuchende Areal gelenkt. Oftmals betreten Passanten das abzusuchende Gelände und stören den Anwender der Vorrichtung bei der Suche, indem beispielsweise Bodenmarkierungen umgetreten werden. Außerdem sehen sich einige Passanten dazu veranlasst, ebenfalls in dem Gelände nach verborgenen Gegenständen zu suchen, so dass sich die Chancen jedes Einzelnen verringern, auf wertvolle Gegenstände zu stoßen.

Aus dem Vorgenannten ist es daher Aufgabe der vorliegenden Erfindung, eine weiterentwickelte Anordnung zum Betreiben eines tragbaren, insbesondere handgeführten geophysikalischen Ortungsgeräts anzugeben, wobei für eine einfache Handhabung Sorge zu tragen ist und gleichzeitig ein Ortungsgerät bereitgestellt wird, welches für Dritte nicht als solches zu erkennen ist.

Die Lösung der Aufgabe der Erfindung erfolgt durch eine Anordnung zum Betreiben eines tragbaren, insbesondere handgeführten geophysikalischen Ortungsgeräts, umfassend einen Sensor, sowie eine Stromversorgung, eine Bedieneinheit und eine Schnittstelle zur drahtlosen Datenübertragung gemäß der Merkmalskombination nach Patentanspruch 1, wobei die Unteransprüche mindestens zweckmäßige Ausgestaltungen und Weiterbildungen darstellen.

Es wird von einer Anordnung zum Betreiben eines handgeführten geophysikalischen Ortungsgeräts ausgegangen, welche mindestens einen Sensor, eine Stromversorgung, eine Bedieneinheit und eine Schnittstelle zur drahtlosen Datenübertragung umfasst.

Erfindungsgemäß sind die Bauteile verdeckt, d. h. getarnt in und/oder an einem Sport- oder Alltags-Stockelement angebracht, wobei mittels der Schnittstelle zur drahtlosen Datenübertragung Daten zu einer mobilen Bewertungs- und Anzeigeeinheit übertragbar sind.

Es sei darauf hingewiesen, dass es bei der erfindungsgemäßen Anordnung zum Betreiben eines Ortungsgerätes unerheblich ist, auf welchem Prinzip die Detektion von verborgenen Gegenständen beruht. So können beispielsweise Flux-Gate-Sensoren Anwendung finden.

Vorzugsweise sind mindestens zwei Sensoren in bzw. an dem Alltags-Stockelement angeordnet.

Als Sport- oder Alltags-Stockelement werden beispielsweise Wanderstöcke, Spazierstöcke, Regenschirme, Sonnenschirme oder Nordic-Walking-Stöcke bezeichnet, wobei die Stockelemente zweckmäßigerweise einen Griff aufweisen. Durch die Anordnung der zum Ortungsgerät zugehörigen Bauteile in oder an einem Alltags-Stockelement kann das Ortungsgerät nicht als solche ausgemacht werden, so dass der Anwender nicht Gefahr läuft von Passanten bei seiner Tätigkeit entdeckt zu werden.

An oder in dem zum Stockelement zugehörigen Griff können ebenfalls zum Ortunggerät zugehörige Bauteile angebracht sein. In dem Griff oder Stockelement angebracht steht im Folgenden dafür, dass ein Bauteil vollständig in dem Griff eingebaut und von diesem umgeben ist, sodass das Bauteil nicht gesehen werden kann. Auch eine Anordnung im Inneren des Stockelementes ist denkbar.

Die Bezeichnung "an dem Alltags-Stockelement oder an dem Griff" sagt aus, dass das Bauteil nicht vollständig verdeckt angeordnet ist, sondern bei Betrachtung des Ortungsgerätes entdeckt werden kann. Allerdings sind die Bauteile in einem solchen Fall derartig ausgestaltet, dass sie nicht als zu einem Ortungsgerät zugehöriges Bauteil erkannt werden können.

Bei der erwähnten Stromversorgung handelt es sich beispielsweise um eine Batterie oder einen Akkumulator. Auch das Anbringen einer stromerzeugenden Solarzelle ist denkbar.

Die Bedieneinheit ist beispielsweise als Start-Stop-Taste ausgeführt. Des Weiteren ist es denkbar, einen Auslöser für manuelle Messimpulse anzubringen. Dieser kann aber auch in die Start-Stop-Taste integriert sein.

Vorteilhafterweise ist die Bedieneinheit am Griff des Alltags-Stockelements angebracht.

Bei der mobilen Bewertungs- und Anzeigeeinheit handelt es sich in einer besonders bevorzugten Ausführungsform der Erfindung um ein Mobiltelefon oder ein PDA. Die auszuwertenden Daten werden vom Ortungsgerät mittels der bereits erwähnten Schnittstelle zur drahtlosen Übertragung an das Mobiltelefon oder PDA übertragen. Vorzugsweise erfolgt die Übertragung mittels Bluetooth, wobei auch eine Infrarotübertragung oder andere drahtlose Kommunikationsmöglichkeiten zur Datenübertragung Anwendung finden können.

Auf das Mobiltelefon wird ein Programm geladen, mittels dessen die Messwerte vom Ortungsgerät via Bluetooth empfangen und zugleich als dreidimensionale Grafik dargestellt werden können. Dies ermöglicht ein Verschieben, Rotieren, oder Zoomen der Grafik.

Die Verwendung eines Mobiltelefons als Bewertungs- und Anzeigeeinheit hat des Weiteren den Vorteil, dass dieser gebräuchliche Alltagsgegenstand nicht auf die Suche nach verborgenen Gegenständen schließen lässt. Videobrillen oder große Bildschirme wecken hingegen die Neugier Dritter.

Vorzugsweise weist die mobile Bewertungs- und Anzeigeeinheit einen Speicher auf. Bei einem Mobiltelefon handelt es sich hierbei z. B. um eine Flash-Karte, auf welche die Messungen des Ortungsgerätes abgespeichert werden können, um diese nach dem Ortungsvorgang an einen Computer übertragen zu können.

Über ein in das Mobiltelefon oder das PDA integrierte GPS-Modul können auch die GPS-Koordinaten der Messpunkte gespeichert werden und zur weiteren Navigation herangezogen werden.

Des Weiteren kann es vorgesehen sein, in oder an das Alltags-Stockelement eine Radioempfangseinheit anzubringen, sodass die Anordnung bei Nichtverwendung des Mobiltelefons beispielsweise als Wanderstock mit Radiofunktion verwendet werden kann. Diese Erklärung kann beispielsweise bei Fragen Dritter zu den an der Griffeinheit angebrachten Start/Stop-Tasten abgegeben werden.

Um beispielsweise das Aussehen und die Form eines Wanderstockes originalgetreuer nachahmen zu können, kann das Alltags-Stockelement als Teleskopstange ausgebildet sein.

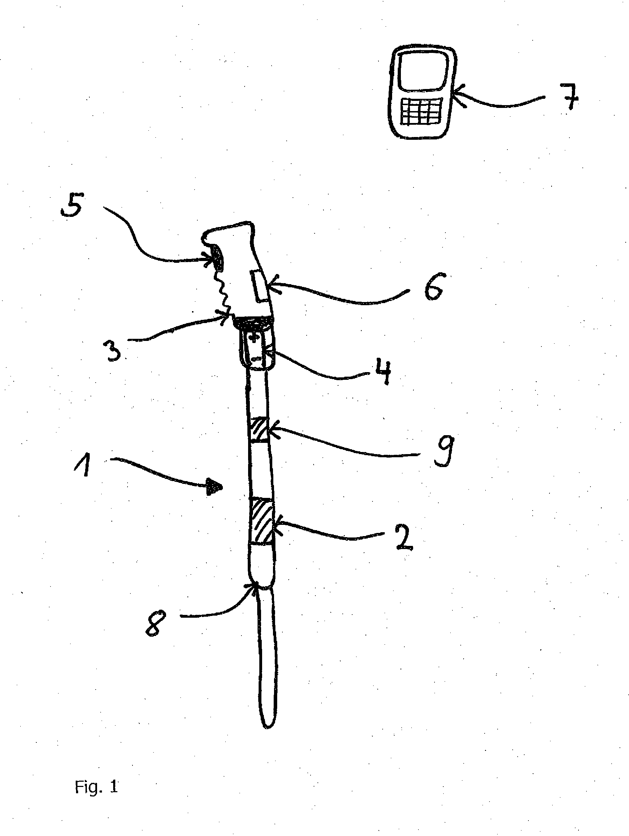

Die Erfindung soll anhand eines Ausführungsbeispiels sowie unter Zuhilfenahme einer Figur näher erläutert werden:
Hierbei zeigt die Figur eine Anordnung zum handgeführten geophysikalischen Ortungsgerätes, welches mehrere Bauteile umfasst, welche getarnt in oder an einem Alltags-Stockelement 1 angebracht sind.
Bei den Bauteilen handelt es sich zunächst um mindestens einen Sensor 2, eine Stromversorgung, welche im dargestellten Ausführungsbeispiel eine Batterie 4 ist, eine Bedieneinheit 5 sowie um eine Schnittstelle 6 zur drahtlosen Datenübertragung.

Das Alltags-Stockelement 1 ist als Wanderstock mit einem Griff 3 ausgebildet, wobei sich der Detektions-Sensor 2 im Inneren des Stockelementes 1 befindet und vom Rohrsystem umgeben wird, so dass der Sensor 2 nicht entdeckt werden kann.

Die Batterie 4 und die Bedieneinheit 5 sind hingegen im Griff 3 angeordnet, wobei die Batterie 4 vollständig vom Material des Griffes 3 umgeben ist und die Bedieneinheit 5 aus einem Start/Stop-Taster besteht und sichtbar am Griff nach Außen weist. Ebenfalls am Griff 3 ist die Schnittstelle zur drahtlosen Datenübertragung angeordnet.

Es können somit die mit dem Sensor 2 ermittelten Messwerte drahtlos über die Bluetooth-Schnittstelle 6 zu einer Bewertungs- und Anzeigeeinheit 7 übertragen werden, wobei diese im dargestellten Beispiel in Form eines Mobiltelefons vorliegt. Ein im Mobiltelefon hinterlegtes Programm wertet die ermittelten Daten aus und kann diese im Anzeigefeld grafisch darstellen.

Des Weiteren ist im Stockelement 1, welches als Teleskopstange 8 ausgebildet ist, ein Radioempfangsgerät 9 eingebaut.

Beim Herannahen von Passanten kann mittels der Bedieneinheit 5 das Radio-empfangsgerät 9 aktiviert werden, sodass keine Erklärungen über die Gestaltung des "Wanderstockes" abgegeben werden müssen.

### Bezugszeichenliste

- 1: Alltags-Stockelement
- 2: Sensor
- 3: Griff
- 4: Batterie
- 5: Bedieneinheit
- 6: Schnittstelle
- 7: Bewertungs- und Anzeigeeinheit
- 8: Teleskopstange
- 9: Radioempfangsgerät

## Patentansprüche

1. Anordnung zum Betreiben eines handgeführten geophysikalischen Ortungsgeräts, umfassend mindestens einen Sensor (2), sowie eine Stromversorgung (4), eine Bedieneinheit (5) und eine Schnittstelle (6) zur drahtlosen Datenübertragung, wobei die Bauteile verdeckt oder getarnt in und/oder an einem Wanderstock, Spazierstock, Regenschirm, Sonnenschirm oder Nordic-Walking-Stock angebracht sind und mittels der Schnittstelle (6) zur drahtlosen Datenübertragung Daten zu einer mobilen Bewertungs- und Anzeigeeinheit (1) übertragbar sind.

2. Anordnung nach Anspruch 1,
**dadurch gekennzeichnet, dass**
es sich bei der mobilen Bewertungs- und Anzeigeeinheit (1) um ein Mobiltelefon oder ein PDA handelt.

3. Anordnung nach einem der vorangegangenen Ansprüche,
**dadurch gekennzeichnet, dass**
der Wanderstock, Spazierstock, Regenschirm, Sonnenschirm oder Nordic-Walking-Stock (1) einen Griff (3) aufweist.

4. Anordnung nach Anspruch 3,
**dadurch gekennzeichnet, dass**
in dem Griff (3) die Bedieneinheit (5) und/oder die Stromversorgung (4) angeordnet ist.

5. Anordnung nach einem der vorangegangenen Ansprüche,
**dadurch gekennzeichnet, dass**
der Wanderstock, Spazierstock, Regenschirm, Sonnenschirm oder Nordic-Walking-Stock (1) als Teleskopstange (8) ausgebildet ist.

6. Anordnung nach einem der vorangegangenen Ansprüche,
**dadurch gekennzeichnet, dass**
der
Wanderstock, Spazierstock, Regenschirm, Sonnenschirm oder Nordic-Walking-Stock eine Radioempfangseinheit (9) aufweist.

7. Anordnung nach einem der vorangegangenen Ansprüche,
**dadurch gekennzeichnet, dass**
die mobile Bewertungs- und Anzeigeinheit (7) eine Speichereinheit aufweist.

## Claims

1. An arrangement for operating a handheld geophysical locating device, comprising at least one sensor (2), a power supply (4), an operating unit (5), and an interface (6) for wireless data transmissions, wherein the components are arranged concealed or disguised in and/or at a hiking pole, walking stick, umbrella, sun umbrella or Nordic walking stick, and wherein data is transferable to a mobile evaluation- and display unit (1) through the interface (6) for wireless data transmissions.

2. The arrangement according to claim 1,
**characterized in that**
the mobile evaluation- and display unit (1) is a mobile telephone or a PDA.

3. The arrangement according to one of the preceding claims,
**characterized in that**
the hiking pole, walking stick, umbrella, sun umbrella or Nordic walking stick includes a handle (3).

4. The arrangement according to claim 3,
**characterized in that**
the operating unit (5) and/or the power supply (4) is arranged in the handle (3).

5. The arrangement according to one of the preceding claims,
**characterized in that**
the hiking pole, walking stick, umbrella, sun umbrella or Nordic walking stick is configured as a telescopic rod (8).

6. The arrangement according to one of the preceding claims,
**characterized in that**
the hiking pole, walking stick, umbrella, sun umbrella or Nordic walking stick includes a radio receiver (9).

7. The arrangement according to one of the preceding claims,
**characterized in that**
a mobile processing and display unit (7) includes a memory unit.

## Revendications

1. Agencement pour le fonctionnement d'un appareil de localisation géophysique tenue à la main, comprenant au moins un capteur (2), ainsi qu'une alimentation électrique (4), une unité de manipulation (5) et une interface (6) pour la transmission de données sans fil, dans lequel les éléments constitutifs sont logés de manière masquée ou dissimulée dans et/ou sur un bâton de randonnée, une canne, un parapluie, un parasol, ou une canne de randonnée nordique, et dans lequel des données sont susceptibles d'être transmises au moyen de l'interface (6) pour la transmission de données sans fil vers une unité mobile d'évaluation et d'affichage (1).

2. Agencement selon la revendication 1,
**caractérisé en ce que** l'unité mobile d'évaluation et d'affichage (1) est un téléphone mobile ou un assistant numérique personnel ("PDA").

3. Agencement selon l'une des revendications précédentes,
**caractérisé en ce que** le bâton de randonnée, la canne, le parapluie, le parasol, ou la canne de randonnée nordique comprend une poignée (3).

4. Agencement selon la revendication 3,
**caractérisé en ce que** l'unité de manipulation (5) et/ou l'alimentation électrique (4) est agencée dans la poignée.

5. Agencement selon l'une des revendications précédentes,
**caractérisé en ce que** le bâton de randonnée, la canne, le parapluie, le parasol, ou la canne de randonnée nordique (1) est réalisé(e) sous forme de tige télescopique (8).

6. Agencement selon l'une des revendications,
**caractérisé en ce que** le bâton de randonnée, la canne, le parapluie, le parasol, ou la canne de randonnée nordique comprend une unité de réception radiophonique (9).

7. Agencement selon l'une des revendications précédentes,
**caractérisé en ce que** l'unité mobile d'évaluation et d'affichage (7) comprend une unité à mémoire.
